(19) **Europäisches Patentamt / European Patent Office / Office européen des brevets**

(11) **EP 2 397 925 B1**

(12) **EUROPÄISCHE PATENTSCHRIFT**

(45) Veröffentlichungstag und Bekanntmachung des Hinweises auf die Patenterteilung:
**10.02.2016 Patentblatt 2016/06**

(51) Int Cl.:
*G05B 19/414* (2006.01)    *B41F 13/004* (2006.01)

(21) Anmeldenummer: **11003956.7**

(22) Anmeldetag: **13.05.2011**

(54) **Verfahren zum Ansteuern wenigstens einer mittels eines Gebersignals an eine Bearbeitungsmaschine angekoppelten Bearbeitungseinrichtung**

Method for controlling at least one processing device coupled to a processing machine by means of an encoder signal

Procédé de commande d'au moins un dispositif de traitement couplé à une machine de traitement à l'aide d'un signal de capteur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.06.2010 DE 102010024524**

(43) Veröffentlichungstag der Anmeldung:
**21.12.2011 Patentblatt 2011/51**

(73) Patentinhaber: **Robert Bosch GmbH**
**70469 Stuttgart (DE)**

(72) Erfinder:
• **Schultze, Stephan**
**97816 Lohr am Main (DE)**
• **Schnabel, Holger**
**97209 Veitshöchheim (DE)**

(74) Vertreter: **Maiß, Harald**
**Bosch Rexroth AG**
**Patentabteilung**
**Ernst-Sachs-Straße 100**
**97424 Schweinfurt (DE)**

(56) Entgegenhaltungen:
EP-A2- 1 912 325    WO-A1-01/20351
WO-A1-99/08374    US-A1- 2009 085 507

**Beschreibung**

Die vorliegende Erfindung betrifft ein Verfahren zum Ansteuern wenigstens einer mittels eines Gebersignals an eine Bearbeitungsmaschine angekoppelten Bearbeitungseinrichtung nach dem Oberbegriff des Patentanspruchs 1 sowie eine entsprechend eingerichtete Bearbeitungsmaschine.

Obwohl die Erfindung im Wesentlichen anhand von Digitaldruckwerken beschrieben wird, bezieht sie sich auf alle Arten von Bearbeitungsmaschinen, bei denen Zusatzaggregate mittels Geberinformationen angekoppelt werden (z.B. mittels Geber-Emulationsschnittstelle eines Automationssystems). Lediglich beispielhaft seien Wicklerbaugruppen in Druckmaschinen bzw. Verpackungsmaschinen, Querschneiderbaugruppen in Produktionsmaschinen (Papierverarbeitung, Blechverarbeitung), Hefterbaugruppen in Druckmaschinen bzw. Buchbindemaschinen und Quersiegelbaugruppen in Verpackungsmaschinen genannt.

Stand der Technik

In der Drucktechnik werden hauptsächlich sogenannte analoge Druckwerke eingesetzt, bei denen das Druckbild als komplette Vorlage, beispielsweise in Form einer Druckplatte oder eines Klischees, vorliegt. Daneben werden jedoch in jüngster Zeit vermehrt sogenannte digitale Druckwerke eingesetzt, bei denen das Druckbild in einer Recheneinheit erzeugt und anschließend, beispielsweise im Tintenstrahldruckverfahren oder im elektrofotografischen Druckverfahren, auf das Material oder einen Bildübertragungszylinder aufgebracht wird. Bei digitalen Druckverfahren besteht insbesondere die Schwierigkeit, den Beginn und das innere Raster, beispielsweise Druckzeilen, des Druckbildes mit dem Bahntransport zu synchronisieren, um eine Registerhaltigkeit zu gewährleisten.

Im Stand der Technik werden dazu reale Inkrementalgeber oder Inkrementalgeber-nachbildungen verwendet. Per Inkrementalgeber an den Bahntransport angekoppelte digitale Druckwerke sind beispielsweise in der DE 10 2006 009 773 A1 oder der EP 1 157 837 A2 beschrieben.

Bei dieser Art der Ankopplung muss das empfangene Gebersignal üblicherweise bearbeitet (gefiltert, umgerechnet usw.) werden, damit die Geberauflösung zur Druckwerksauflösung passt. Wird ein Druckwerk beispielsweise mit 600 dpi (Dots per Inch) betrieben, ist es zweckmäßig, wenn ebenfalls 600 Geberimpulse pro Inch Vorschub der Warenbahn oder des Materialbogens zur Verfügung stehen. Dazu ist jedoch oftmals eine sehr aufwendige Nachbearbeitung (Filterung, Interpolation, Mehrfachauswertung, Vervielfachung etc.) des empfangenen Gebersignals nötig.

In den meisten Fällen sind im regelungstechnischen Pfad der Gebersignale bis zum bearbeitenden Aggregat zusätzlich Totzeiten oder Verzögerungszeiten vorhanden, die bei der Geberaufbereitung im Zusatzaggregat kompensiert werden müssen. Dabei handelt es sich insbesondere um Totzeiten einer Geberemulation, Totzeiten bei einer Datenübertragung des Gebersignals, Verzögerungszeiten durch Filterung des (verrauschten) Gebersignals und Totzeiten im Zusatzaggregat von der Geberauswertung bis zur Bearbeitung.

Die beschriebenen Tot- bzw. Verzögerungszeiten sollten berücksichtigt werden, da sich ansonsten maschinengeschwindigkeitsabhängige Winkelfehler (z.B. Registerfehler, Schnittfehler, ...) ergeben.

Die EP 1 912 325 A2 beschreibt in diesem Zusammenhang ein Verfahren, bei dem an Bearbeitungseinrichtungen Daten übertragen werden, die erst zu einem zukünftigen Zeitpunkt gültig sind. Der Zeitpunkt selbst wird dann durch Übertragen eines Triggersignals bekanntgegeben. Eine zukünftige Position wird aus einer aktuellen Position, einer aktuellen Geschwindigkeit und einer Übertragungszeit bestimmt.

Zur Verminderung geschwindigkeitsabhängiger Fehler kann aus dem (gefilterten) Gebersignal durch einmalige Differentiation eine Geschwindigkeit gebildet und mit dieser die Geberposition extrapoliert werden. Zur zusätzlichen Verminderung beschleunigungsabhängiger Fehler kann aus dem (gefilterten) Gebersignal durch zweimalige Differentiation eine Beschleunigung gebildet und mit dieser die Geberposition zusätzlich extrapoliert werden.

Durch die Differentiationen wird jedoch der Rauschanteil erhöht, insbesondere bei zweimaliger Differentiation führt dies zu einer starken Verschlechterung des extrapolierten Gebersignals. Durch die Filterung ergibt sich eine Verzögerung, die auch durch die Extrapolation nicht komplett kompensiert werden kann: Im Falle nur einer geschwindigkeitsabhängigen Extrapolation wird sich bei Beschleunigungsvorgängen ein dynamischer Winkelfehler während der kompletten Beschleunigungsphase ausbilden. Im Falle einer zusätzlichen beschleunigungsabhängigen Extrapolation wird beim Übergang von konstanter Geschwindigkeit zum Beschleunigungsvorgang ein dynamischer Winkelfehler auftreten.

Es ist daher wünschenswert, die Genauigkeit der Anbindung per Gebersignal einer Bearbeitungseinrichtung an den Transport der Warenbahn bzw. des Materialbogens zu erhöhen.

Offenbarung der Erfindung

Erfindungsgemäß werden ein Verfahren zum Ansteuern wenigstens einer Bearbeitungseinrichtung einer Bearbeitungsmaschine sowie eine Bearbeitungsmaschine mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung macht sich zu Nutze, dass in modernen Bewegungssteuerungseinrichtung (Motion Control) die bei einer Anbindung per Gebersignal für die Korrektur, insbesondere Interpolation, verwendeten Werte, d.h. insbesondere Geschwindigkeit, Beschleunigung, Ruck usw., ohnehin zur Verfügung stehen und daher zusätzlich zum Gebersignal von dort an die Bearbeitungseinrichtung übertragen werden können. Für die Übertragung können insbesondere auch bereits vorhandene Nicht-Echtzeit-Verbindungen verwendet werden, so dass der Implementierungsaufwand gering bleibt. Durch die erfindungsgemäße Maßnahme wird die Genauigkeit der Positionsauswertung erhöht und das dynamische Übergangsverhalten bei Beschleunigungsvorgängen verbessert. Erfindungsgemäß wird neben dem Gebersignal über eine weitere Kommunikationsverbindung wenigstens eine zusätzliche den Transport kennzeichnende Größe, nämlich Geschwindigkeit, Beschleunigung, oder Ruck, übertragen. Diese Übertragung findet typischerweise über ein Nicht-Echtzeit-Kommunikationssystem statt, welches oftmals z.B. in Form einer Ethernet-Verbindung vorhanden ist. Das Gebersignal kann von der Bewegungssteuerungseinrichtung, einer Transporteinrichtung und/oder einer Bearbeitungseinrichturig stammen, wie es allgemein bekannt ist. Das Gebersignal umfasst eine Transportposition.

Da die Zusatzdaten meist in digitaler (unverrauschter) Form in der Motion Control vorhanden sind, ist eine Rekonstruktion dieser Daten aus gestörten, verrauschten Geberdaten nicht notwendig. Somit wird einerseits eine Erhöhung des Rauschsignals aufgrund der einfachen bzw. doppelten Differentiation verhindert, andererseits sind keine weiteren Filtermechanismen für die ermittelten Geschwindigkeits- bzw. Beschleunigungswerte notwendig.

Durch die Korrektur, insbesondere Extrapolation, mittels hochgenauer Zusatzdaten kann auch ein Gebersignal mit geringerer inkrementeller Auflösung verwendet werden, da die "fehlenden" Geberinkremente durch die Extrapolation selbständig im Zusatzaggregat berechnet werden können. Somit können einfachere Geber oder Geberemulationen verwendet werden, was zu einer Kostensenkung führt.. Grundsätzlich sollte hierbei der Nullimpuls des Gebers eine hohe Genauigkeit besitzen. Im Grenzfall wird nur noch der Nullimpuls der 0-Spur benötigt und alle weiteren Informationen werden aus den Zusatzdaten extrapoliert. Eine etwas höhere Genauigkeit erhält man jedoch, indem man die Gebereingänge mit A-/B-Spuren auswertet und nur die Extrapolation anhand der Zusatzdaten durchführt.

Optional ist es im Sinne der Erfindung ebenfalls möglich, den Nullimpuls der 0-Spur durch ein hochgenaues Trigger- bzw. Synchronisationssignal zu ersetzen.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

Figurenbeschreibung

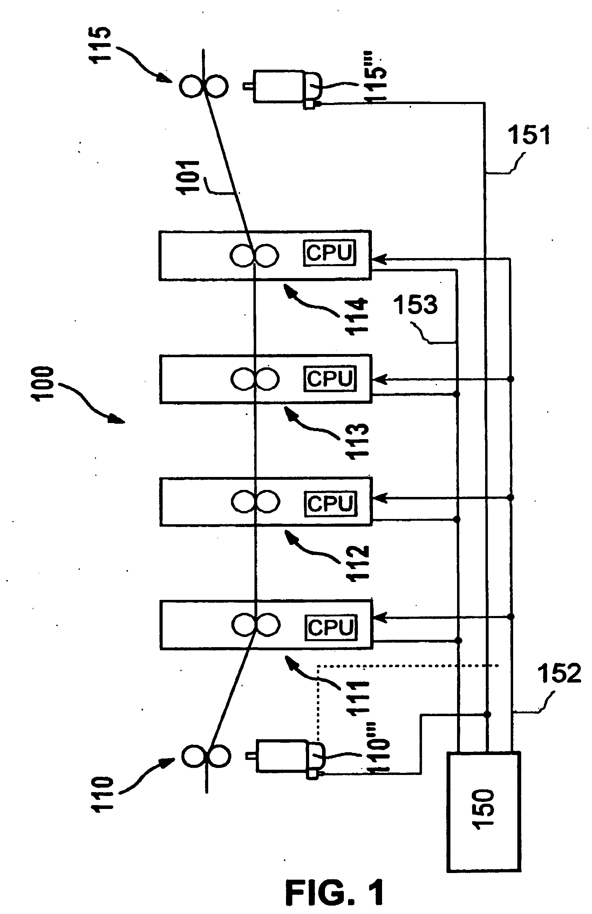

Figur 1 zeigt eine schematische Darstellung einer bevorzugten Ausführungsform einer als Druckmaschine ausgebildeten erfindungsgemäßen Bearbeitungsmaschine.

Ausführungsform(en) der Erfindung

In Figur 1 ist eine bevorzugte Ausführungsform einer als Druckmaschine ausgebildeten erfindungsgemäßen Bearbeitungsmaschine schematisch dargestellt und insgesamt mit 100 bezeichnet. Ein Bedruckmaterial, beispielsweise Papier 101, wird der Maschine über ein Einzugswerk (Infeed) 110 zugeführt. Das Papier 101 wird durch hier als Digitaldruckwerke 111, 112, 113, 114 ausgebildete Bearbeitungseinrichtungen geführt und bedruckt und durch ein Auszugswerk (Outfeed) 115 wieder ausgegeben. Im gezeigten Beispiel dienen das Einzugs- und das Auszugswerk zum Transport des Bedruckmaterials. Alternativ oder zusätzlich können entsprechende angetriebene Bearbeitungseinrichtungen vorgesehen sein, die das Material bearbeiten und transportieren.

Das Einzugswerk 110 weist einen Antrieb 110''' und das Auszugswerk 115 einen Antrieb 115''' auf, die jeweils über eine Datenverbindung 151 mit einer (Transport-) Steuerungseinrichtung 150, bspw. einer SPS, verbunden sind. Der Antrieb 110''' bzw. 115''' beinhaltet dabei beispielsweise einen Motor und eine Ansteuerelektronik. Die Datenverbindung 151 kann insbesondere als echtzeitfähige Feldbusverbindung, bspw. als SERCOS III-Verbindung, ausgeführt sein. Über die Datenverbindung 151 wird bspw. eine Leitachsposition digital ("wellenlos") an das Einzugswerk 110 und das Auszugswerk 115 übertragen.

Die Digitaldruckwerke 111 bis 114 können beispielsweise auf einem Tintenstrahlprinzip basieren oder elektrofotografisch arbeiten. Die Druckwerke übertragen das Druckbild beispielsweise zeilenweise auf das Material 101. Zur Ansteuerung der Druckwerke 111 bis 114 werden Gebersignale - wie bekannt - auf einer entsprechenden Geberleitung 152 übertragen. Die Gebersignale können - wie im vorliegenden Beispiel - als Geberemulation von der Steuerungseinrichtung 150 oder - wie durch den gestrichelten Pfeil angedeutet - von einem Drehgeber erzeugt werden. Als eine weitere Ausgestaltungsmöglichkeit bietet sich eine Geberemulationsverbindung aus der Ansteuerelektronik der Antriebe 110 bzw. 115 über die Geberleitung zu den Digitaldruckwerken an. Allgemein kann die Geberinformation- wie in Figur 1 dargestellt - in einer Bus-Struktur oder sternförmig (nicht dargestellt) übertragen werden. In letzterem Falle sind mehrere Gebersignalausgänge im System notwendig.

Weiterhin ist die Steuerungseinrichtung 150 über eine weitere Datenverbindung 153 mit den Druckwerken 111 bis 114 verbunden. Es kann sich dabei insbesondere um eine herkömmliche Digitalverbindung, bspw. Ethernet, handeln, an die keine besonderen Anforderungen insbesondere hinsichtlich Echtzeit gestellt werden und die meist ohnehin vorhanden ist. Über diese weitere Datenverbindung 153 werden gemäß einer bevorzugten Ausführungsform der Erfindung die in der Steuerungseinrichtung 150 vorhandenen Werte betreffend die Bahngeschwindigkeit, die Bahnbeschleunigung und den Bahnruck digital übertragen, so dass diese nicht in den einzelnen Druckwerken mittels Differentiation des Gebersignals bestimmt werden müssen.

Die Gebersignale werden ohne Extrapolation ausgewertet und die Zusatzdaten zur Extrapolation verwendet. Die Auswertung des Gebersignals ist insbesondere deshalb zweckmäßig, da dieses die absolute Positionsinformation hochgenau enthält. Beispielsweise ist bei einem inkrementellen Gebersignal mit A-/B-/0-Spur in der 0-Spur die Referenzinformation bzgl. der absoluten Position innerhalb einer Geberumdrehung enthalten. Jedes der Druckwerke 111 bis 114 weist entsprechende Mittel zur Korrektur des Gebersignals anhand der empfangenen Zusatzdaten, üblicherweise eine Recheneinheit (CPU), auf. Somit kann im Druckwerk eine Interpolation durchgeführt werden, um bspw. einen zeilenweisen Digitaldruck genau durchführen zu können.

Eine bevorzugte Korrektur der aus dem Gebersignal bestimmten Position $pos_G$ unter Verwendung einer über die Verbindung 153 übertragen Geschwindigkeit $v$ und optional einer übertragen Beschleunigung $a$ und optional eines übertragen Rucks $j$ ergibt sich zu:

$$pos_{Korr} = pos_G + k_v \cdot v \, (+ \, k_a^2 \cdot a \,) \, (+ \, k_j^3 \cdot j)$$

mit

$pos_{Korr}$: korrigierte Position
$k_v$, $k_a$, $k_j$: Korrekturfaktoren

Die Korrekturfaktoren sind bspw. über Messfahrten bestimmbar. In diese gehen insbesondere die anfangs beschriebenen Tot- und Verzögerungszeiten ein. Die Korrektur wird in dem Druckwerk durchgeführt, wozu dieses eine programmtechnisch entsprechend eingerichtete Recheneinheit (CPU) aufweist.

In bevorzugter Ausgestaltung wird als Korrekturfaktor nur eine Übertragungsverzögerung $t_U$ berücksichtigt. Besitzt die Übertragung der Zusatzdaten eine merkliche Laufzeit $t_U$, so sind die Daten beim Empfang bereits mehr oder weniger veraltet. Wenn bspw. während einer Beschleunigungsphase einer Achse mit einer Beschleunigung von a = 100 U/min/s die Geschwindigkeit $v$ mit einer laufzeitbehafteten Verzögerung von $t_U$ = 100 ms über die Verbindung 153 übertragen wird, liegt der Geschwindigkeitswert, der für die Korrektur verwendet wird, um 10 U/min daneben.

Als korrigierten Positionswert $pos_{korr}$ erhält man bei linearer Geschwindigkeitsextrapolation:

$$pos_{Korr} = pos_G + t_U \cdot v$$

Hier bleibt jedoch ein beschleunigungsabhängiger Positionsfehler erhalten. Dieser äußert sich typischerweise dadurch, dass während einer Beschleunigungs- oder Bremsphase die Bearbeitungsposition abweicht.

Das Ergebnis kann durch zusätzliche Verwendung einer übertragenen Beschleunigung a verbessert werden:

$$pos_{Korr} = pos_G + t_U \cdot v + t_U^2 \cdot a$$

Eine weitere Verbesserung ist durch zusätzliche Verwendung eines übertragenen Rucks j erzielbar:

$$pos_{Korr} = pos_G + t_U \cdot v + t_U^2 \cdot a + t_U^3 \cdot j$$

Damit diese Extrapolationsoptimierung durchgeführt werden kann, ist eine Kenntnis der Übertragungszeit $t_U$ notwendig. Auch wenn diese meist nicht hochgenau ermittelt werden kann, wird die Erhöhung der Genauigkeit selbst bei geschätzter Übertragungszeit wesentlich verbessert.

**Patentansprüche**

1. Verfahren zum Ansteuern wenigstens einer mittels eines Gebersignals angekoppelten Bearbeitungseinrichtung (111, 112, 113, 114) einer Bearbeitungsmaschine (100), wobei in der Bearbeitungsmaschine (100) ein Material (101) transportiert und von der Bearbeitungseinrichtung (111, 112, 113, 114) bearbeitet wird, wobei die Bearbeitungsmaschine (100) wenigstens eine Bewegungssteuerungseinrichtung (150) zur Steuerung des Transports des Materials aufweist, wobei das Gebersignal eine Transportposition umfasst und an die Bearbeitungseinrichtung (111, 112, 113, 114) übertragen wird, wobei wenigstens eine zusätzliche den Transport kennzeichnende Größe von der Bewegungssteuerungseinrichtung (150) digital an die wenigstens eine Bearbeitungseinrichtung (111, 112, 113, 114) übertragen und zur Korrektur des Gebersignals verwendet wird, wobei die wenigstens eine zusätzliche den Transport kennzeichnende Größe eine Transportgeschwindigkeit, eine Transportbeschleunigung und/oder einen Transportruck umfasst, **dadurch gekennzeichnet, dass** eine Bearbeitung des Materials (101) in der wenigstens einen Bearbeitungseinrichtung (111, 112, 113, 114) anhand des korrigierten Gebersignals durchgeführt wird.

2. Verfahren nach Anspruch 1, wobei die wenigstens eine zusätzliche den Transport kennzeichnende Größe von der Bewegungssteuerungseinrichtung (150) an die wenigstens eine Bearbeitungseinrichtung (111, 112, 113, 114) über eine Nicht-Echtzeit-Verbindung (153) übertragen wird.

3. Verfahren nach Anspruch 2, wobei bei der Korrektur des Gebersignals eine für die Übertragung der wenigstens einen zusätzlichen den Transport kennzeichnenden Größe von der Bewegungssteuerungseinrichtung (150) an die wenigstens eine Bearbeitungseinrichtung (111, 112, 113, 114) notwendige Zeit berücksichtigt wird.

4. Verfahren nach Anspruch 3, wobei die Zeit geschätzt oder gemessen wird.

5. Verfahren nach einem der vorstehenden Ansprüche, wobei das Gebersignal nur eine Nullposition umfasst.

6. Verfahren nach einem der vorstehenden Ansprüche, wobei ein, insbesondere digitales, Druckwerk (111, 112, 113, 114) einer Druckmaschine (100) angesteuert wird.

7. Bearbeitungsmaschine (100) zur Bearbeitung eines Materials, umfassend wenigstens eine Bewegungssteuerungseinrichtung (150) zur Steuerung eines Transports des Materials, wenigstens eine Bearbeitungseinrichtung (111, 112, 113, 114) zur Bearbeitung des Materials, sowie eine Datenverbindung (152) zur Übertragung eines Gebersignals an die wenigstens eine Bearbeitungseinrichtung (111, 112, 113, 114), wobei das Gebersignal eine Transportposition umfasst,

wobei die Bearbeitungsmaschine (100) eine weitere Datenverbindung (153) von der Bewegungssteuerungseinrichtung (150)

zu der wenigstens einen Bearbeitungseinrichtung (111, 112, 113, 114) zur digitalen Übertragung wenigstens einer zusätzlichen den Transport kennzeichnenden Größe und

Mittel (CPU) zur Korrektur des Gebersignals innerhalb der Bearbeitungseinrichtung (111, 112, 113, 114) anhand der wenigstens einen zusätzlichen den Transport kennzeichnenden Größe aufweist,

wobei die wenigstens eine zusätzliche den Transport kennzeichnende Größe eine Transportgeschwindigkeit, eine Transportbeschleunigung und/oder einen Transportruck umfasst,

**dadurch gekennzeichnet,**

**dass** die Bearbeitungsmaschine dazu eingerichtet ist, eine Bearbeitung des Materials (101) in der wenigstens einen Bearbeitungseinrichtung (111, 112, 113, 114) anhand des korrigierten Gebersignals durchzuführen.

8. Bearbeitungsmaschine (100) nach Anspruch 7, die zur Durchführung eines Verfahrens nach einem der Ansprüche 2 bis 6 eingerichtet ist.

9. Bearbeitungsmaschine (100) nach Anspruch 7 oder 8, die wenigstens eine angetriebene Transporteinrichtung (110, 115) und/oder eine angetriebene Bearbeitungseinrichtung 30 aufweist.

**Claims**

1. Method for controlling at least one machining device (111, 112, 113, 114) of a machine tool (100) which is coupled by means of an encoder signal, a material (101) being transported in the machine tool (100) and being machined by the machining device (111, 112, 113, 114), the machine tool (100) having at least one motion control device (150) for controlling the transport of the material, the encoder signal comprising a transport position and being transmitted to the machining device (111, 112, 113, 114),
at least one additional variable which characterizes the transport being digitally transmitted from the motion control device (150) to the at least one machining device (111, 112, 113, 114) and being used to correct the encoder signal, the at least one additional variable which characterizes the transport comprising a transport speed, a transport acceleration and/or a transporter jerk, **characterized in that** the material (101) is machined in the at least one machining device (111, 112, 113, 114) using the corrected encoder signal.

2. Method according to Claim 1, the at least one additional variable which characterizes the transport being transmitted from the motion control device (150) to the at least one machining device (111, 112, 113, 114) via a non-real-time link (153).

3. Method according to Claim 2, a time needed to transmit the at least one additional variable which characterizes the transport from the motion control device (150) to the at least one machining device (111, 112, 113, 114) being taken into account when correcting the encoder signal.

4. Method according to Claim 3, the time being estimated or measured.

5. Method according to one of the preceding claims, the encoder signal comprising only a zero position.

6. Method according to one of the preceding claims, a printing unit (111, 112, 113, 114), in particular a digital printing unit, of a printing machine (100) being controlled.

7. Machine tool (100) for machining a material, comprising at least one motion control device (150) for controlling transport of the material, at least one machining device (111, 112, 113, 114) for machining the material, and a data link (152) for transmitting an encoder signal to the at least one machining device (111, 112, 113, 114), the encoder signal comprising a transport position,
the machine tool (100) having a further data link (153) from the motion control device (150) to the at least one machining device (111, 112, 113, 114) for digitally transmitting at least one additional variable which characterizes the transport, and
means (CPU) for correcting the encoder signal inside the machining device (111, 112, 113, 114) using the at least one additional variable which characterizes the transport,
the at least one additional variable which characterizes the transport comprising a transport speed, a transport acceleration and/or a transport jerk,
**characterized in that** the machine tool is set up to machine the material (101) in the at least one machining device (111, 112, 113, 114) using the corrected encoder signal.

8. Machine tool (100) according to Claim 7, which is set up to carry out a method according to one of Claims 2 to 6.

9. Machine tool (100) according to Claim 7 or 8, which has at least one driven transport device (110, 115) and/or a driven machining device.

**Revendications**

1. Procédé de commande d'au moins un dispositif de traitement (111, 112, 113, 114), raccordé au moyen d'un signal de capteur, d'une machine de traitement (100),
un matériau (101) étant transporté dans la machine de traitement (100) et étant traité par le dispositif de traitement (111, 112, 113, 114),
la machine de traitement (100) présentant au moins un dispositif (150) de commande du déplacement qui commande le transport du matériau,
le signal de capteur saisissant une position de transport et étant transmis au dispositif de traitement (111, 112, 113, 114),
au moins une grandeur supplémentaire caractérisant le transport étant transmise numériquement par le dispositif (150) de commande du déplacement au dispositif ou aux dispositifs de traitement (111, 112, 113, 114) et étant utilisé pour corriger le signal de capteur,
la ou les grandeurs supplémentaires caractérisant le transport comprenant la vitesse de transport, l'accélération du transport et/ou un recul du transport,
**caractérisé en ce que**
le traitement du matériau (101) dans le ou les dispositifs de traitement (111, 112, 113, 114) est exécuté à l'aide du signal de capteur corrigé.

2. Procédé selon la revendication 1, dans lequel la ou les grandeurs supplémentaires caractérisant le transport sont transmises par le dispositif (150) de commande du déplacement au dispositif ou aux dispositifs (111, 112, 113, 114) de traitement par une liaison (153) non en temps réel.

3. Procédé selon la revendication 2, dans lequel la durée nécessaire pour la transmission de la ou des grandeurs supplémentaires caractérisant le transport par le dispositif (150) de commande du transport au dispositif ou aux dispositifs (111, 112, 113, 114) de traitement est prise en compte dans la correction du signal de capteur.

4. Procédé selon la revendication 3, dans lequel la durée est estimée ou mesurée.

5. Procédé selon l'une des revendications précédentes, dans lequel le signal de capteur ne comporte qu'une position nulle.

6. Procédé selon l'une des revendications précédentes, dans lequel un mécanisme d'impression (111, 112, 113, 114), notamment un mécanisme numérique, d'une machine d'impression (100) est commandé.

7. Machine de traitement (100) destinée à traiter un matériau, comprenant
au moins un dispositif (150) de commande du déplacement qui commande le transport du matériau,
au moins un dispositif de traitement (111, 112, 113, 114) qui traite le matériau ainsi qu'une liaison de données (152) qui transfère un signal de capteur au dispositif ou aux dispositif de traitement (111, 112, 113, 114), le signal de capteur comprenant une position de transport,
la machine de traitement (100) ayant une autre liaison de données (153) entre le dispositif (150) de commande du déplacement et le ou les dispositifs de traitement (111, 112, 113, 114) en vue d'une transmission numérique d'au moins une grandeur supplémentaire caractérisant le transport et des moyens (CPU) qui corrigent signal de capteur à l'intérieur du dispositif de traitement (111, 112, 113, 114) à l'aide de la ou des grandeurs supplémentaires caractérisant le transport,
la ou les grandeurs supplémentaires caractérisant le transport comprenant la vitesse de transport, l'accélération du transport et/ou un recul du transport, **caractérisée en ce que**
la machine de traitement est conçue pour exécuter un traitement du matériau (101) dans le ou les dispositifs de traitement (111, 112, 113, 114) à l'aide du signal de capteur corrigé.

**8.** Machine de traitement (100) selon la revendication 7, conçue pour mettre en oeuvre un procédé selon l'une des revendications 2 à 6.

**9.** Machine de traitement (100) selon les revendications 7 ou 8, présentant au moins un dispositif de transport (110, 115) entraîné et/ou un dispositif de traitement entraîné.

FIG. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006009773 A1
- EP 1157837 A2
- EP 1912325 A2